# EUROPÄISCHE PATENTSCHRIFT

(11) **EP 0 374 373 B1**
(45) Veröffentlichungstag und Bekanntmachung des Hinweises auf die Patenterteilung: **07.01.1993**
(21) Anmeldenummer: 89116413.9
(22) Anmeldetag: 06.09.1989
(51) Int. Cl.: C21D 9/30

(54) **Verfahren und Vorrichtung zum verzugsarmen Härten von Kurbelwellen**
Process and device for the low distortion hardening of crankshafts
Procédé et dispositif pour le durcissement de vilebrequins à faible distorsion

(30) Priorität: 20.12.1988 DE 3842808
(43) Veröffentlichungstag der Anmeldung: 27.06.1990
(73) Patentinhaber: AEG-Elotherm GmbH, D-42855 Remscheid (DE)
(72) Erfinder: Emde, Friedhelm, D-5609 Hückeswagen (DE)
(74) Vertreter: Werner, Dietrich H., Dr.-Ing.

(56) Entgegenhaltungen:
- DE-B- 1 209 137
- DE-C- 3 737 694
- GB-A- 959 886
- GB-A- 2 194 557

## Beschreibung

Die Erfindung betrifft ein Verfahren zum verzugsarmen Härten von Kurbelwellen durch sequenzielles elektroinduktives Erhitzen der Hub- und Hauptlagerflächen und anschließendes Abschrecken. Die Erfindung betrifft ferner eine Vorrichtung zum elektroinduktiven Erhitzen der Lagerflächen einer in Lagerböcken beidendig drehbar um ihre Achse eingespannten Kurbelwelle mittels reitender Induktoren, die auf einem in Achsrichtung der eingespannten Kurbelwelle verfahrbaren Härtewagen angeordnet, sind sowie Wasserbrausen auf dem Härtewagen zum Abschrecken der erhitzten Lagerflächen zum Zwecke des Oberflächenhärtens.

Im günstigsten Falle kann eine Kurbelwelle am Haupt-und Hublager mit zwei verschiedenen Induktortypen gehärtet werden. Die Hublager haben immer gleiche Lagerabmessungen, während die Hauptlager meist unterschiedliche Lagerbreiten oder Härtezonenausführungen haben, üblicherweise aber nicht mehr als vier unterschiedliche Ausführungen, nämlich Zapfen-, Flansch-, Mittel- und Paßlager. Daraus resultiert eine standardmäßige Kurbelwellenhärtevorrichtung mit fünf verschiedenen Induktorgehängen, eine für Hublager und vier für Hauptlager. Im allgemeinen versucht man jedoch aus mehreren Gründen die Hauptlager gleich zu halten, so daß mit weniger als vier unterschiedlichen Hauptlager-Induktortypen gearbeitet werden kann.

Die Härteseqzenz ist meist frei wählbar. Dabei wird üblicherweise ein Hublager und ein Hauptlager gleichzeitig gehärtet, so daß bei einer sechshübigen Kurbelwelle die komplette Härtung in sieben Härtesequenzen abläuft, sechsmal je ein Hublager und ein Hauptlager und das siebte Hauptlager separat
Beim Härten von Lagerstellen an mehrhübigen Kurbelwellen treten unter Umständen erhebliche Verzugsprobleme auf, die man nach dem Stand der Technik durch Härten der einzelnen Lagerstellen in einer bestimmten vorgegebenen Härtesequenz eingrenzt, weil ein nachträgliches Richten radiengehärteter Kurbelwellen nicht zulässig ist. Geringste Verzüge werden erreicht, wenn Hublager mit gleichen radialen Winkelstellungen gleichzeitig gehärtet werden.

Nach bisheriger Methode wären für die verzugs- und bearbeitungszeit-minimierende Härtesequenz bei sechshübigen Kurbelwellen sechs Hublagerinduktoren eingesetzt worden und ggf. sechs oder sieben Hauptlagerinduktoren, was einen erheblichen Investitionsaufwand bedeutet hätte.

Zum verzugsarmen, dennoch aber produktionssteigernden Härten von Kurbelwellen wird erfindungsgemäß vorgeschlagen, daß mit nur zwei Hublagerinduktoren alle Hublagerflächen einer Kurbelwelle gehärtet werden, und zwar jeweils zwei symmetrisch zur Achsmitte liegende Hublagerflächen gleichzeitig. Auf diese Weise wird nicht nur der Verzug der Kurbelwelle beim Härten minimiert, sondern auch mit geringeren Mitteln bei günstigster Härtesequenz die Produktion beibehalten.

Eine Produktionssteigerung kann dadurch erreicht werden, daß gemäß einer bevorzugten Ausführung des erfindngsgemäßen Verfahrens gleichzeitig mit dem Hublagerflächenpaar zwei Hauptlagerflächen gehärtet werden.

Gemäß einer bevorzugten Ausgestaltung des erfindungsgemäßen Verfahrens wird die Härtung der Lagerflächen in der Reihenfolge von außen nach innen vorgenommen. Bei einer sechshübigen Kurbelwelle empfiehlt sich die Härtung der Hublagerflächen I mit VI, II mit V und III mit IV, bevorzugt in dieser Reihenfolge.

Die erfindungsgemäße Vorrichtung zum elektroinduktiven Erhitzen der Lagerflächen einer drehbar um ihre Achse eingespannten Kurbelwelle mittels reitender Induktoren, die auf einem in Achsrichtung der eingespannten Kurbelwelle verfahrbaren Härtewagen angeordnet sind, sowie mittels Wasserbrausen auf dem Härtewagen zum Abschrecken der erhitzten Lagerflächen zum Zwecke des Oberflächenhärtens besitzt in erfindungsgemäßer Weise auf dem Härtewagen nur zwei Induktoren zum Härten der Hublagerflächen, von denen mindestens einer gegenüber dem anderen in Achsrichtung der Kurbelwelle am Härtewagen verschiebbar angeordnet ist. Bevorzugt können ferner zwei Induktoren für die Härtung der Hauptlagerflächen am Härtewagen angeordnet sein, von denen bevorzugt mindestens einer in Achsrichtung der Kurbelwelle am Härtewagen verschiebbar ist. Die Hauptlagerinduktoren können mit den Hublagerinduktoren mechanisch gekoppelt sein, wobei diese Kopplung im Abstand verstellbar sein kann.

Das erfindungsgemäße Verfahren sieht vor, die Härtung mit nur zwei Hublager-Induktoren auszuführen. Zusätzlich zur Wagenfahrt, die den einen Induktor in die Arbeitsstellung bringt, ist eine weitere Welle am Härtewagen vorhanden, die den zweiten Induktor in die jeweilige Position relativ zur Kurbelwelle und gleichzeitig relativ zum ersten Induktor verschieben kann. An dieser Welle kann in Ergänzung des Vorschlags ein weiteres Induktorgehänge-Paar angebunden werden, das als Hauptlagergehänge fungiert und die gleichen Verfahrensvorteile beim Hauptlagerhärten ermöglicht. Üblicherweise kann das Hauptlager-Induktorgehänge ein fixes Abstandsmaß zum Hublager-Induktorgehänge erhalten, das mindestens der Gehängebreite entspricht. Es kann jedoch auch vorteilhaft sein, diesen Abstand veränderlich zu gestalten, um dem Stichmaß der jeweiligen Kurbelwelle angepaßt zu werden.

Für das Verschieben des oder der Induktoren auf dem Härtewagen sind vorzugsweise mechanische, hydraulische oder pneumatische NC-gesteuerte Antriebe vorgesehen.

Anhand des in der Zeichnung dargestellten Ausführungsbeispiels wird die Erfindung näher erläutert. Es zeigen:
Figur 1 das Schema einer sechshübigen Kurbelwelle und
Figur 2 eine Härtevorrichtung schematisch in Seitenansicht.

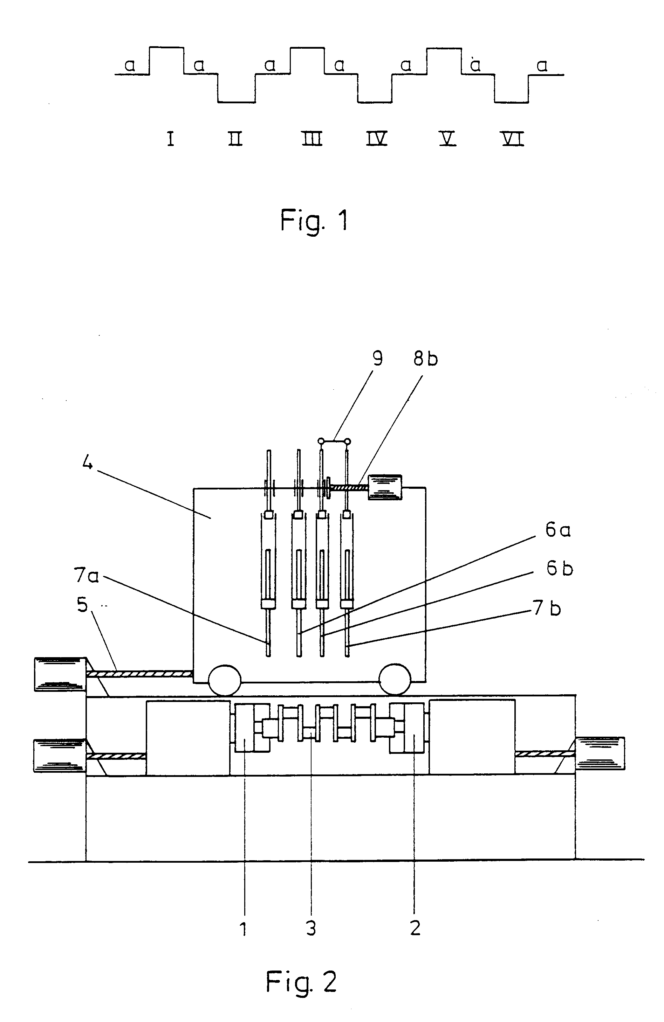

Die sechshübige Kurbelwelle hat nach Figur 1 sechs Hublager I bis VI und sieben Hauptlager a. Die erfindungsgemäße Härtesequenz erfaßt das paarweise Härten der Hublagerflächen I mit VI, II mit V und III mit IV in beliebiger Reihenfolge. Werden bei einem Härtevorgang jeweils zwei Hublagerflächen und anschließend jeweils zwei Hauptlagerflächen gehärtet, so umfaßt die gesamte Härtesequenz sieben Härtevorgänge, nämlich drei für Hublagerflächenpaare, drei für die Hauptlagerflächenpaare und zusätzlich einen Härtevorgang für das siebente Hauptlager.

Werden mit den Hublagern jeweils ein benachbartes Hauptlager gehärtet, so umfaßt die gesamte Härtesequenz nur vier Härtevorgänge.

Zur Ausführung des geschilderten Härteverfahrens umfaßt die Härtevorrichtung in bekannter Weise zwei auf einem Maschinenbett M relativ zueinander verschiebbare Spannköpfe 1,2 zum beidendigen Einspannen der um ihre Achse drehbar gelagerten Kurbelwelle 3.

Parallel zur Kurbelwelle 3 ist ein Härtewagen 4 mittels eines Antriebs 5 verfahrbar angeordnet, auf dem im dargestellten Ausführungsbeispiel vier Induktorgehänge 6,7 mit integrierten Abschreckbrausen angeordnet sind. Die Induktoren sind vom bekannten auf der zu härtenden Werkstückoberfläche aufgesetzten reitenden halboffenen Typ mit einem Parallelogrammgehänge, welches es ermöglicht, daß der Induktor, auf den ausmittigen Hublagerzapfen I bis VI sitzend, die Umlaufbewegung des Hublagerzapfens mitmachen kann.

Zwei Induktoren 6a,6b dienen zum Härten der Hublagerzapfen und zwei Induktoren 7a,7b sind für das Härten der Hauptlagerzapfen bestimmt. Ein Induktor 6a für das Hublagerhärten und ein Induktor 7a für das Hauptlagerhärten sind auf dem Wagen 4 ortsfest angeordnet. Die beiden übrigen Induktoren 6b,7b sind mittels eines Antriebes 8b und einer ggf. verstellbaren mechanischen Kopplung q relativ zueinander und zu den ortsfesten Induktoren 6a,7a verschiebbar am Härtewagen 4 angeordnet.

Für den Fall der gleichzeitigen Härtung von Hub- und Hauptlagern kann das Abstandsmaß von Hub- und Hauptlagergehänge in Relation zu den jeweiligen Kurbelwellenmaßen durch Verknüpfen der Induktoren oder durch Verstellen der Abstandsmaße zwischen den Gehängen erfolgen. Dann kann je nach Bedarf sowohl eine manuell zu betätigende mechanische Einrichtung als auch eine servogetriebene evt. NC-gesteuerte Einrichtung sinnvoll sein.

Das Ausrichten der Induktoren zu den zu härtenden Lagerstellen geht so vonstatten, daß der Härtewagen 4 zunächst soweit gegenüber der eingespannten Kurbelwelle 3 verfahren wird, bis die ortsfesten Induktoren 6a,7a die zu härtenden Lagerstellen erreicht haben. Anschließend werden die beiden übrigen Induktoren 6b,7b auf die beiden anderen zu härtenden Lagerstellen ausgerichtet und dazu mittels des Antriebes 8b in Achsrichtung der Kurbelwelle 3 verschoben.

Obwohl das erfindungsgemäße Verfahren und die Vorrichtung anhand der Härtung von sechshübigen Kurbelwellen beschrieben wurde, ergibt die Anwendung für das Härten von Kurbelwellen mit anderen Hubzahlen den gleichen Vorteil einer schnelleren verzugsarmen produktionssteigernden Härtung der Lagerstellen.

## Patentansprüche

1. Verfahren zum verzugsarmen Härten von Kurbelwellen durch sequenzielles elektroinduktives Erhitzen der Hub- und Hauptlagerflächen und anschließendes Abschrecken,
**dadurch gekennzeichnet,** daß mit nur zwei Induktoren (6a, 6b) alle Hublagerflächen (I - VI) gehärtet werden, wobei jeweils zwei symmetrisch zur Achsmitte liegende Hublagerflächen gleichzeitig gehärtet werden.

2. Verfahren zum verzugsarmen Härten von sechshübigen Kurbelwellen nach Anspruch 1,
**dadurch gekennzeichnet,** daß die Hublagerflächen (I - VI) paarweise gehärtet werden, und zwar die äußeren (I, VI), mittleren (II, V) und inneren (III, IV).

3. Verfahren nach Anspruch 1 oder 2,
**dadurch gekennzeichnet,** daß auch die Hauptlagerflächen (a) mit nur zwei Induktoren (7a, 7b) paarweise gehärtet werden.

4. Verfahren nach einem der Ansprüche 1 bis 3,
**dadurch gekennzeichnet,** daß die paarweise Härtung der Lagerflächen (I - VI, a) in der Reihenfolge von außen nach innen vorgenommen wird.

5. Vorrichtung zum elektroinduktiven Erhitzen der Lagerflächen einer drehbar um ihre Achse eingespannten Kurbelwelle mittels reitender Induktoren, die auf einem in Achsrichtung der eingespannten Kurbelwelle verfahrbaren Härtewagen angeordnet sind, sowie Wasserbrausen auf dem Härtewagen zum Abschrecken der erhitzten Lagerflächen zum Zwecke des Oberflächenhärtens,
**dadurch gekennzeichnet,** daß auf dem Härtewagen (4) zwei Induktoren (6a,6b) zum Härten der Hublagerflächen (I-VI) vorgesehen sind, von denen mindestens einer (6b) gegenüber dem oder den anderen in Achsrichtung der Kurbelwelle (3) am Härtewagen verschiebbar angeordnet ist.

6. Vorrichtung nach Anspruch 4,
**dadurch gekennzeichnet,** daß zwei zusätzliche Induktoren (7a,7b) für die Härtung der Hauptlagerflächen a vorhanden sind.

7. Vorrichtung nach Anspruch 6,
**dadurch gekennzeichnet,** daß mindestens einer dieser zusätzlichen Induktoren (7b) in Achsrichtung der Kurbelwelle (3) am Härtewagen (4) verschiebbar ist.

8. Vorrichtung nach Anspruch 5 oder 6,
**dadurch gekennzeichnet,** daß ein mechanischer, hydraulischer oder pneumatischer NC-gesteuerter Antrieb (8b) für das Verschieben der Induktoren (6b,7b) auf dem Härtewagen (4) vorgesehen ist.

## Claims

1. A process for the low distortion hardening of crankshafts by the sequential electric inductive heating of the crank and main bearing faces followed by quenching characterized in that all the crank bearing surfaces (I-VI) are hardened with only two inductors (6a, 6b) each pair of crank bearing surfaces lying symmetrically of the centre of the axis being hardened simultaneously.

2. A process for the low distortion hardening of 6-stroke crankshafts according to claim 1, characterized in that the crank bearing surfaces (I-VI) are hardened in pairs, namely the outer surfaces (I, VI), the middle surfaces (II, V) and the inner surfaces (III, IV).

3. A process according to claims 1 or 2, characterized in that the main bearing surfaces (a) are also hardened in pairs with only two inductors (7a, 7b).

4. A process according to one of claims 1 to 3, characterized in that the hardening of the bearing surfaces (I-VI, a) in pairs is performed in the inward sequence.

5. A device for the electric induction heating of the bearing surfaces of a crankshaft clamped to rotate around its axis by means of moving inductors which are disposed on a hardening carriage movable in the axial direction of the clamped crankshaft, and also by spraying water on the hardening carriage to quench the heated bearing surfaces for the purpose of surface hardening, characterized in that two inductors (6a, 6b) are provided on the hardening carriage (4) for hardening the crank bearing surfaces (I-VI), of which at least one inductor (6b) is disposed on the hardening carriage displaceably in the axial direction of the crankshaft (5) in relation to the or each other inductor.

6. A device according to claim 4, characterized in that two additional inductors (7a, 7b) are provided for hardening the main bearing surfaces (a).

7. A device according to claim 6, characterized in that at least one of the additional inductors 7b can be displaced on the hardening carriage (4) in the axial direction of the crankshaft (3).

8. A device according to claims 5 or 6, characterized in that a mechanical, hydraulic or pneumatic numerically controlled drive (8b) is provided for displacing the inductors (6b, 7b) on the hardening carriage (4).

## Revendications

1. Procédé pour la trempe avec faible étirage de vilebrequins par chauffage électro-inductif séquentiel des surfaces de levée et de supports principaux et trempe subséquente,
caractérisé en ce que toutes les surfaces de supports de levée (I-VI) soient trempées avec seulement deux inducteurs (6a, 6b), à chaque fois simultanément deux surfaces de supports de levée se trouvant symétriques par rapport au milieu de l'axe.

2. Procédé pour la trempe avec faible étirage de vilebrequins à six levées selon la revendication 1,
caractérisé en ce que les surfaces de supports de levée (I-VI) sont trempées par paires, à savoir les extérieures (I-VI), les moyennes (II-V) et les intérieures (III,IV).

3. Procédé selon la revendication 1 ou 2,
caractérisé en ce qu'également les surfaces de supports principaux (a) sont trempées par paires avec seulement deux inducteurs (7a, 7b).

4. Procédé selon l'une des revendications 1 à 3,
caractérisé en ce que la trempe par paires des surfaces d'appui (I-VI, a) est effectuée selon la séquence de l'extérieur vers l'intérieur.

5. Dispositif pour le chauffage électro-inductif des surfaces de supports d'un vilebrequin encastré monté rotatif autour de son axe au moyen d'inducteurs chevauchants, qui sont disposés sur un chariot de trempe mobile dans la direction axiale du vilebrequin encastré, ainsi qu'au moyen de douches à eau sur le chariot de trempe pour la trempe des surfaces de supports chauffées dans le but de la trempe superficielle,
caractérisé en ce que deux inducteurs (6a, 6b) sont prévus sur le chariot de trempe (4) pour la trempe des surfaces de supports de levée (I-VI), parmi lesquels au moins un (6b) est disposé coulissant par rapport à l'autre ou aux autres en direction axiale du vilebrequin (3) sur le chariot de trempe.

6. Dispositif selon la revendication 5,
caractérisé en ce que deux inducteurs (7a, 7b) supplémentaires sont disponibles pour la trempe des surfaces de supports principaux a.

7. Dispositif selon la revendication 6,
caractérisé en ce qu'au moins un de ces inducteurs (7b) supplémentaires est coulissant en direction axiale du vilebrequin (3) sur le chariot de trempe (4).

8. Dispositif selon la revendication 5 ou 6,
caractérisé en ce qu'un entraînement à commande numérique (8b) mécanique, hydraulique ou pneumatique pour le coulissement des inducteurs (6b, 7b) est prévu sur le chariot de trempe (4).
